# EUROPEAN PATENT APPLICATION

(11) **EP 4 089 298 A1**
(43) Date of publication of application: **16.11.2022**
(21) Application number: 22170863.9
(22) Date of filing: 29.04.2022
(51) Int. Cl.: F16D 55/224, B61H 5/00, F16D 65/18, F16D 65/00, F16D 55/00

(54) **BRAKE CALIPER**

(30) Priority: 13.05.2021 JP 2021081932
(71) Applicant: Nabtesco Corporation, Tokyo 102-0093 (JP)
(72) Inventor: Utsumi, Takashi, Tokyo 102-0093 (JP)
(74) Representative: Grünecker Patent- und Rechtsanwälte PartG mbB

(57) **Abstract**

Provided is a brake caliper having easily replaceable components. A brake caliper (14) includes an upper left lever (47) holding a brake pad (12) configured to be pressed against a disc (11) so that a braking force is generated, and a left support (32A) rotatably supporting the upper left lever (47) such that a distance between the brake pad (12) and the disc (11) is adjustable. The brake caliper (14) has a replaceable member (100) provided between the upper left lever (47) and the left support (32A), and the replaceable member (100) has lower hardness than the upper left lever (47) or the left support (32A).

## Description

### TECHNICAL FIELD

The present invention relates to a brake caliper.

### BACKGROUND

Patent Literature 1 discloses a brake caliper device for applying a braking force to a wheel of a railway vehicle by forcing a brake pad against a disc rotating integrally with the wheel. The brake caliper device includes a pair of left and right caliper levers having brake pads attached at the tip ends thereof, an actuator for driving the left and right caliper levers such that their brake pads approach to and separate from the disc, and a body rotatably holding the left and right caliper levers via rotating shafts. A gap adjuster is provided between the base ends of the left and right caliper levers. The caliper levers are held rotatably by the corresponding rotating shafts.

### RELEVANT REFERENCES

### LIST OF RELEVANT PATENT LITERATURE

Patent Literature 1: Japanese Patent No. 5174899

### SUMMARY

When braking is applied, axial torque and rotational sliding load are applied to contact portions where the caliper levers and the body are connected to each other in the brake caliper device disclosed in Patent Literature 1. Accordingly, as the sliding resistance between the caliper levers and the body increases, the body or support may wear out due to the friction between the support and the caliper levers. This may disadvantageously require replacement of the support.

To solve the above-mentioned problems, a brake caliper includes caliper levers holding brake pads, where the brake pads are configured to sandwich a brake disc therebetween so that a braking force is generated, and a support rotatably supporting the caliper levers such that a distance between the brake pads and the brake disc is adjustable. Replaceable members are provided between the caliper levers and the support, and have lower hardness than the caliper levers or the support.

With the above-described arrangement, the replaceable members having lower hardness than the caliper levers or support come into contact with the caliper levers or support when the caliper levers rotate. It is thus the replaceable members that wear out. The replaceable members can be replaced easily. When the caliper levers touch the support, the caliper levers or support may be damaged. Accordingly, the components of the brake caliper can be replaced more easily.

In the brake caliper described above, the replaceable members preferably have lower hardness than the caliper levers and the support. In the brake caliper described above, the support is preferably a body holding an actuator for driving the caliper levers such that the caliper levers rotate about a fulcrum.

In the brake caliper described above, the body preferably has pins fitted in the caliper levers to rotatably support the caliper levers, and the replaceable members are preferably provided at least one of (i) between tip portions of the pins and the caliper levers, or (ii) between peripheries of root portions of ends of the pins and the caliper levers.

The brake caliper described above preferably includes radial bearings surrounding the pins to receive loads acting in a radial direction orthogonal to an axial direction of the pins, and restricting members restricting the radial bearings from being out of position in the axial direction of the pins. The replaceable members are preferably provided between the peripheries of the root portions of the ends of the pins and the caliper levers, and the caliper levers are preferably not in contact with the restricting members, but in contact with the replaceable members.

In the brake caliper described above, the replaceable members are preferably annular and have an aperture, and provided between the root portions of the ends of the pins and the caliper levers with the pins penetrating the apertures.

In the brake caliper described above, the replaceable members are preferably provided (i) between the body and upper portions of the caliper levers, and (ii) between the body and lower portions of the caliper levers.

The brake caliper described above preferably further includes elastic members provided between the replaceable members and the body. In the brake caliper described above, the body preferably has pins fitted in the caliper levers to rotatably support the caliper levers, and the replaceable members and the elastic members are preferably annular and have an aperture, and provided between the root portions of the ends of the pins and the caliper levers with the pins penetrating the apertures.

In the brake caliper described above, the elastic members are preferably made of at least one of chloroprene rubber, urethane rubber, or silicone rubber. In the brake caliper described above, a contact area between the elastic members and the replaceable members is preferably greater than a contact area between the replaceable members and the caliper levers.

In the brake caliper described above, the support is preferably a gap adjuster connected to ends of the brake pads such that the brake pads are rotatable about a fulcrum, and the gap adjuster is configured to adjust gaps between the brake disc and the brake pads.

To solve the above problems, a brake caliper includes caliper levers holding brake pads, where the brake pads are configured to sandwich a brake disc therebetween so that a braking force is generated, a body rotatably supporting the caliper levers such that a distance between the brake pads and the brake disc is adjustable, where the body holds an actuator for driving the caliper levers such that the caliper levers are rotatable about a fulcrum, and replaceable members having lower hardness than the caliper levers and the body. The body has pins fitted in the caliper levers to rotatably support the caliper levers, and the replaceable members are provided at least one of (i) between tip portions of the pins and the caliper levers, or (ii) between peripheries of root portions of ends of the pins and the caliper levers.

With the above-described arrangement, the replaceable members having lower hardness than the caliper levers and body come into contact with the caliper levers or body when the caliper levers rotate. It is thus the replaceable members that wear out. The replaceable members can be replaced easily. When the caliper levers touch the body, the caliper levers or body may be damaged. Accordingly, the components of the brake caliper relating to the present embodiment can be replaced more easily.

### ADVANTAGEOUS EFFECTS

The present invention allows the components to be replaced with ease.

### BRIEF DESCRIPTION OF THE DRAWINGS

Fig. 1 is a perspective view showing the configuration of a brake caliper device relating to a first embodiment.
Fig. 2 is across-sectional view showing the configuration of the brake caliper device relating to the first embodiment.
Fig. 3 is an exploded perspective view showing the configuration of the brake caliper device relating to the first embodiment.
Fig. 4 is a partial sectional view showing a left side surface of the brake caliper device relating to the first embodiment.
Fig. 5 is an enlarged sectional view of the brake caliper device relating to the first embodiment, showing a connecting portion between an upper left lever and a left rotation pin.
Fig. 6 is an enlarged sectional view of the brake caliper device relating to the first embodiment, showing the connecting portion between the upper left lever and the left rotation pin.
Fig. 7 is an enlarged sectional view of the brake caliper device relating to the first embodiment, showing a connecting portion between a lower left lever and the left rotation pin.
Fig. 8 is an enlarged sectional view of the brake caliper device relating to the first embodiment, showing the connecting portion between the lower left lever and the left rotation pin.
Fig. 9 is a partial sectional view showing a right side surface of the brake caliper device relating to the first embodiment.
Fig. 10 is an enlarged sectional view of the brake caliper device relating to the first embodiment, showing a connecting portion between an upper right lever and a right rotation pin.
Fig. 11 is an enlarged sectional view of the brake caliper device relating to the first embodiment, showing the connecting portion between a lower right lever and the right rotation pin.
Fig. 12 shows stress applied to a replaceable member provided in the brake caliper device relating to the first embodiment.
Fig. 13 shows stress applied to a replaceable member provided in the brake caliper device relating to the first embodiment.
Fig. 14 is an enlarged sectional view showing a brake caliper device relating to a second embodiment, showing a connecting portion between an upper left lever and a left rotation pin.
Fig. 15 is an enlarged sectional view showing the brake caliper device relating to the second embodiment, showing the connecting portion between a lower left lever and the left rotation pin.
Fig. 16 is an enlarged sectional view showing the brake caliper device relating to the second embodiment, showing a connecting portion between an upper right lever and a right rotation pin.
Fig. 17 is an enlarged sectional view showing the brake caliper device relating to the second embodiment, showing a connecting portion between a lower right lever and the right rotation pin.
Fig. 18 is an enlarged partial sectional view showing a brake caliper device relating to a third embodiment, showing a connecting portion between an upper left lever and a gap adjuster and a connecting portion between a lower left lever and the gap adjuster.

### DESCRIPTION OF THE PREFERRED EMBODIMENTS

### <First Embodiment

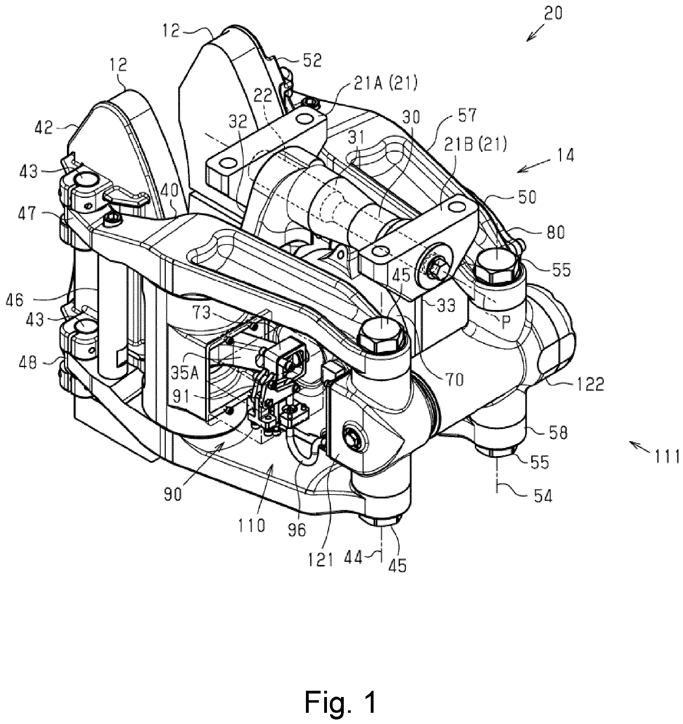

The following describes a brake caliper device relating to a first embodiment with reference to Figs. 1 to 13.

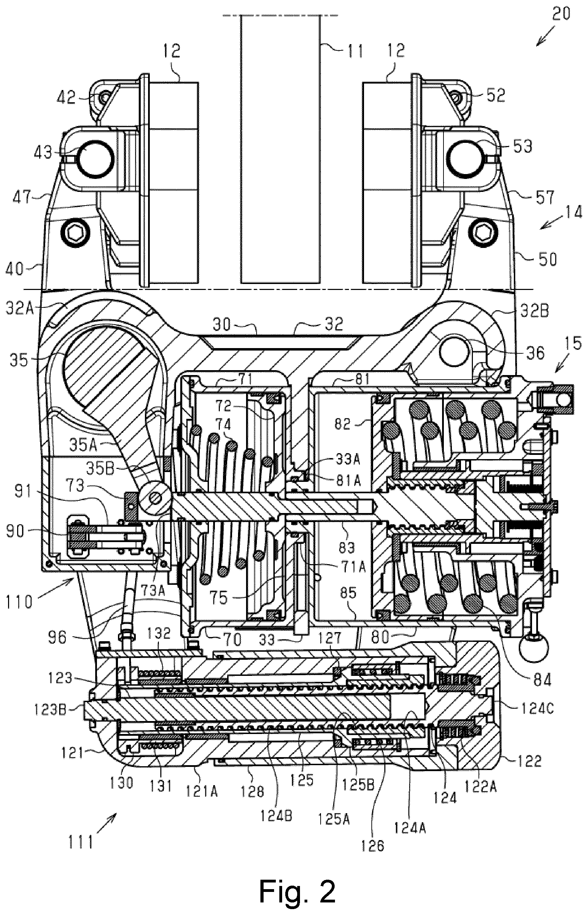

As shown in Figs. 1 and 2, a brake caliper device 20 is mounted to a bogie (not shown) of a railway vehicle and configured to apply a braking force to a wheel of the bogie by pressing brake pads 12 against a disc 11 (see Fig. 2) that is rotatable integrally with an axle for rotating the wheel. The brake caliper device 20 and the disc 11 together constitute a disc brake device. The brake caliper device 20 includes a brake caliper 14 and a cylinder device 15. Note that the disc 11 corresponds to a brake disc.

The brake caliper device 20 includes a bracket 21 (see Fig. 1) mounted to the bogie, a body 30 rotatably hung on the bracket 21, and a pair of caliper levers held by the body 30, i.e., left and right caliper levers 40 and 50. The left and right caliper levers 40 and 50 each hold a brake pad 12, so that the brake pads 12 sandwich the disc 11 therebetween to exert a braking force. The body 30 rotatably supports the left and right caliper levers 40 and 50. As the left and right caliper levers 40 and 50 rotate, the distance between the brake pads 12 and the disc 11 changes.

The brake caliper device 20 further includes a cylinder device 15 for, when driven, rotating the left and right caliper levers 40 and 50 about a fulcrum so that the brake pads 12 are pressed against the disc 11. The cylinder device 15 is driven by compressed air fed thereto and discharged therefrom. The compressed air fed to the cylinder device 15 is taken from a tank installed on the railway vehicle. The cylinder device 15 is removably mounted to the body 30. Here, the cylinder device 15 corresponds to an actuator.

The bracket 21 includes a first bracket 21A and a second bracket 21B. The body 30 is disposed between the first bracket 21A and the second bracket 21B. A coupling pin 22 penetrates through the first bracket 21A, the body 30, and the second bracket 21B to couple together the first bracket 21A, the body 30, and the second bracket 21B. The body 30 has a base portion 31 through which the coupling pin 22 penetrates. The base portion 31 rotates about a rotational axis P that extends orthogonal to the axial direction of the axle of the bogie and extends along a direction in which the left and right caliper levers 40 and 50 extend.

The body 30 includes a first support portion 32 that extends from below the base portion 31 toward the left and right caliper levers 40 and 50 to support the left and right caliper levers 40 and 50. The body 30 also includes a second support portion 33 that extends from the center of the first support portion 32 toward the rear side in the longitudinal direction of the left and right caliper levers 40 and 50 to support the cylinder device 15. In the present embodiment, the second support portion 33 is a plate-shaped member. The base portion 31, the first support portion 32, and the second support portion 33 of the body 30 are formed as a single unit body. When the bogie is tilted in the axial direction of the axle, the body 30 rotates about the rotational axis P. This enables the brake pads 12 to always remain parallel to the disc 11.

A left support portion 32A supporting the left caliper lever 40 is provided on the left portion of the first support portion 32. A left rotation pin 35 penetrates through the left support portion 32A to rotatably support the left caliper lever 40 relative to the body 30. The left rotation pin 35 is held in the body 30 and is rotatable relative to the left support portion 32A. An operation lever 35A is fixedly attached to the left rotation pin 35 and is operated by a driving force from the cylinder device 15. A right support portion 32B supporting the right caliper lever 50 is provided on the right portion of the first support portion 32. Right rotation pins 36 penetrate through the upper and lower portions of the right support portion 32B respectively to rotatably support the right caliper lever 50 relative to the body 30. The right rotation pins 36 are fixed to the right support portion 32B. The left and right rotation pins 35 and 36 correspond to pins.

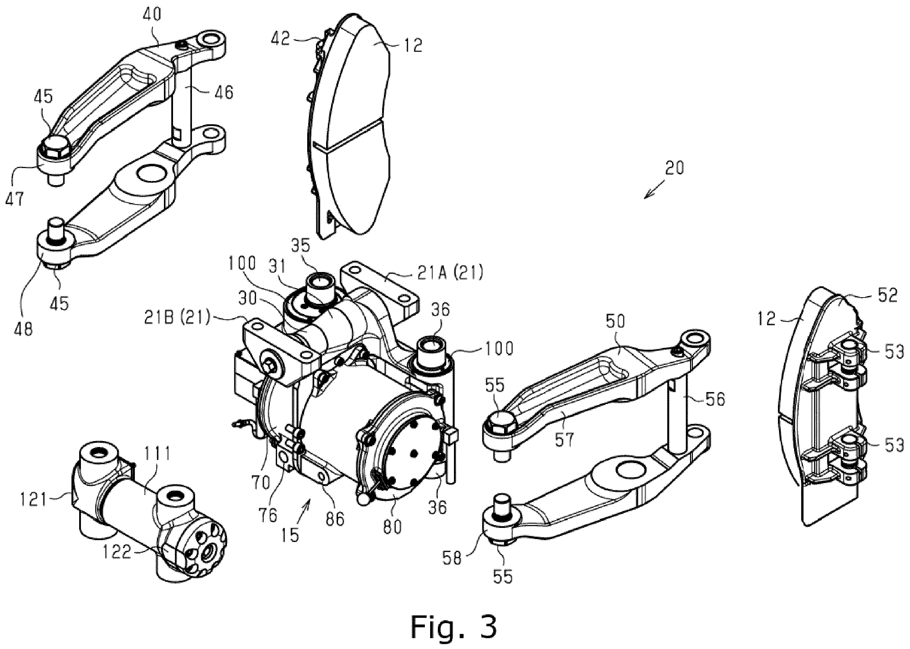

As shown in Fig. 3, the left caliper lever 40 includes a pair of levers, i.e., an upper left lever 47 and a lower left lever 48. The upper and lower left levers 47 and 48 are spaced away from each other and face each other in the axial direction of the left rotation pin 35. At the tip end of the left caliper lever 40, a pad attachment member 42 is connected via two pad rotation pins 43. To the pad attachment member 42, the brake pad 12 is attached (see Fig. 1). The pad rotation pins 43 are rotatable relative to the upper and lower left levers 47 and 48. The pad rotation pins 43 are fixedly attached to the pad attachment member 42. The upper and lower left levers 47 and 48 are coupled together via a left lever coupling pin 46.

The right caliper lever 50 includes a pair of levers, i.e., an upper right lever 57 and a lower right lever 58. The upper and lower right levers 57 and 58 are spaced away from each other and face each other in the axial direction of the right rotation pins 36. At the tip end of the right caliper lever 50, a pad attachment member 52 is connected via two pad rotation pins 53. To the pad attachment member 52, the brake pad 12 is attached. The pad rotation pins 53 are rotatable relative to the upper and lower right levers 57 and 58. The pad rotation pins 53 are fixedly attached to the pad attachment member 52. The upper and lower right levers 57 and 58 are coupled together via a right lever coupling pin 56.

As shown in Fig. 2, the cylinder device 15 is mounted to the second support portion 33 of the body 30. The cylinder device 15 includes a service brake cylinder 70 and a parking brake cylinder 80. The service brake cylinder 70 is mounted to the left-side surface of the second support portion 33 of the body 30. These surfaces are perpendicular to the axle. The parking brake cylinder 80 is mounted to the right-side surface of the second support portion 33 of the body 30. This means that the service and parking brake cylinders 70 and 80 sandwich the second support portion 33 of the body 30. The surfaces of the second support portion 33 to which the service brake cylinder 70 and the parking brake cylinder 80 are mounted are parallel to the direction in which the left and right caliper levers 40 and 50 extend and are parallel to the surface of the brake pads 12.

As shown in Fig. 3, the service and parking brake cylinders 70 and 80 are each fixed to the second support portion 33 with four bolts. The bolts fixedly attaching the service brake cylinder 70 are differently positioned on the second support portion 33 than the bolts fixedly attaching the parking brake cylinder 80. Therefore, the service and parking brake cylinders 70 and 80 can be mounted to and removed from the second support portion 33 independently from each other.

As shown in Fig. 2, the second support portion 33 of the body 30 has an opening 33A formed at the center thereof. The opening 33A is elongated in the longitudinal direction of the left and right caliper levers 40 and 50. With such a design, in mounting and removing the service and parking brake cylinders 70 and 80, they can be moved in the opening 33A in the longitudinal direction of the left and right caliper levers 40 and 50.

The service brake cylinder 70 can be removed from the left-side surface of the second support portion 33 of the body 30 by taking off the bolts. The parking brake cylinder 80 can be removed from the right-side surface of the second support portion 33 of the body 30 by taking off the bolts. A gap adjustment device 110, described below, can be removed from the left and right caliper levers 40 and 50 by taking off bolts 45 and 55. With such a design, the cylinder device 15 and the gap adjustment device 110 can be readily removed and mounted for inspection and replacement. Any number of bolts may be used to fix the cylinder device 15.

The service brake cylinder 70 includes a first cylinder chamber 71, a first piston 72, a first rod 73, and a first spring 74. The first piston 72 moves within the first cylinder chamber 71. The first rod 73 is fixed to the first piston 72 and projects from the first cylinder chamber 71. The first spring 74 energizes the first piston 72 in such a direction that the first rod 73 is housed in the first cylinder chamber 71. In the first cylinder chamber 71, the first spring 74 is provided on one of the sides defined with respect to the first piston 72, and a first space 75 is defined on the other side. The service brake cylinder 70 includes a first feeding port 76 for feeding compressed air into the first space 75 within the first cylinder chamber 71 (see Fig. 3). The first feeding port 76 is provided outside the first cylinder chamber 71. When the compressed air is fed into the first space 75 within the first cylinder chamber 71 of the service brake cylinder 70, the first piston 72 is pushed such that the first rod 73 projects. When the compressed air is discharged from the first space 75 within the first cylinder chamber 71 of the service brake cylinder 70, the first spring 74 pushes the first piston 72 so that the first rod 73 is accommodated in the first cylinder chamber 71.

The parking brake cylinder 80 includes a second cylinder chamber 81, a second piston 82, a second rod 83, and a second spring 84. The second piston 82 moves within the second cylinder chamber 81. The second rod 83 is fixed to the second piston 82 and projects from the second cylinder chamber 81 and extends into the first cylinder chamber 71. The second spring 84 energizes the second piston 82 in such a direction that the second rod 83 projects from the second cylinder chamber 81. In the second cylinder chamber 81, the second spring 84 is provided on one of the sides defined with respect to the second piston 82, and a second space 85 is defined on the other side. The parking brake cylinder 80 includes a second feeding port 86 (see Fig. 3) for feeding compressed air into the second space 85 within the second cylinder chamber 81. The second feeding port 86 is provided outside the second cylinder chamber 81. When the compressed air is fed into the second space 85 within the second cylinder chamber 81 of the parking brake cylinder 80, the second piston 82 is pushed such that the second rod 83 is accommodated into the second cylinder chamber 81. When the compressed air is discharged from the second space 85 in the second cylinder chamber 81 of the parking brake cylinder 80, the second spring 84 pushes the second piston 82, so that the second rod 83 projects from the second cylinder chamber 81 and enters the first cylinder chamber 71. As a result, the second rod 83 pushes the first piston 72, so that the first rod 73 projects outside.

The first cylinder chamber 71 includes a first projecting portion 71A that projects into the opening 33A. The second cylinder chamber 81 includes a second projecting portion 81A that projects into the opening 33A. The second projecting portion 81A is penetrated by the second rod 83. The first projecting portion 71A is fitted around the second projecting portion 81A. With such arrangement, the first rod 73 of the service brake cylinder 70 and the second rod 83 of the parking brake cylinder 80 are positioned coaxially, and the output of the parking brake cylinder 80 is transmitted to the service brake cylinder 70.

A rotatable roller 35B is attached to the tip end of the operation lever 35A. The first rod 73 of the cylinder device 15 has a receiving portion 73A provided in the tip end thereof. The receiving portion 73A is a through-hole for receiving therein the roller 35B while touching the roller 35B. The receiving portion 73A is configured to transmit the driving force from the first rod 73 to the operation lever 35A, while absorbing the lag between the linear movement of the first rod 73 and the rotational movement of the operation lever 35A.

As shown in Figs. 1 and 2, the brake caliper device 20 includes the gap adjustment device 110 for adjusting the gaps between the brake pads 12 and the disc 11. The gap adjustment device 110 includes a gap adjuster 111 for adjusting the gaps and a gap output unit 90 for outputting a gap to the gap adjuster 111. The gap output unit 90 includes a pulling unit 91 and a wire 96. The pulling unit 91 pulls the wire 96 to an extent determined by the amount of movement of the first rod 73 of the cylinder device 15. The gap adjuster 111 connects between the base ends of the left and right caliper levers 40 and 50. The left caliper lever 40 and the gap adjuster 111 are turnably coupled with each other with a pair of upper and lower bolts 45. The right caliper lever 50 and the gap adjuster 111 are turnably coupled with each other with a pair of upper and lower bolts 55. The left caliper lever 40 and the gap adjuster 111 rotate about a rotational axis 44, and the right caliper lever 50 and the gap adjuster 111 rotate about a rotational axis 54.

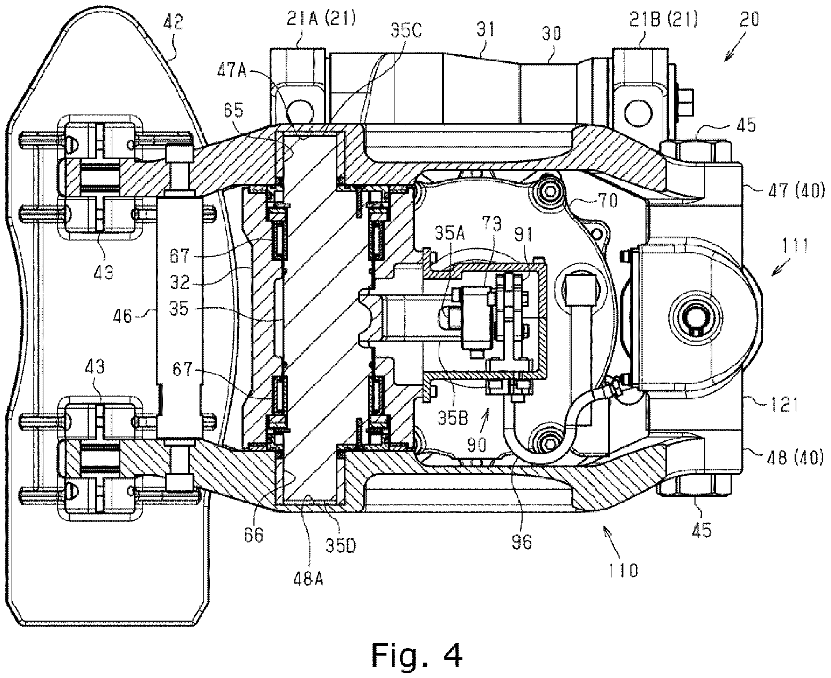

As shown in Fig. 4, an upper end 35C of the left rotation pin 35 is placed within a space 47A defined in the upper left lever 47. The upper end 35C of the left rotation pin 35 is rotatable relative to the upper left lever 47. An upper end radial bearing 65 is provided in the space 47A within the upper left lever 47. The upper end radial bearing 65 surrounds the upper end 35C of the left rotation pin 35 so as to receive load acting in the radial direction orthogonal to the axial direction of the left rotation pin 35. For example, a needle bearing is used as the upper end radial bearing 65. When the left rotation pin 35 is rotated and the upper end 35C of the left rotation pin 35 moves, the upper end 35C of the left rotation pin 35 touches the upper end radial bearing 65, which can reduce contact friction between the upper end 35C of the left rotation pin 35 and the upper left lever 47.

A lower end 35D of the left rotation pin 35 is placed within a space 48A defined in the lower left lever 48. The lower end 35D of the left rotation pin 35 is rotatable relative to the lower left lever 48. A lower end radial bearing 66 is provided in the space 48A defined in the lower left lever 48. The lower end radial bearing 66 surrounds the lower end 35D of the left rotation pin 35 so as to receive load acting in the radial direction orthogonal to the axial direction of the left rotation pin 35. For example, a needle bearing is used as the lower end radial bearing 66. When the left rotation pin 35 is rotated and the lower end 35D of the left rotation pin 35 moves, the lower end 35D of the left rotation pin 35 touches the lower end radial bearing 66, which can reduce contact friction between the lower end 35D of the left rotation pin 35 and the lower left lever 48.

The upper and lower ends 35C and 35D of the left rotation pin 35 are located coaxially and eccentrically with respect to the central axis of the left rotation pin 35. Thus, when the left rotation pin 35 is rotated, the upper and lower ends 35C and 35D of the left rotation pin 35 rotate around the central axis of the left rotation pin 35 as the rotation center to drive the left caliper lever 40.

Two body radial bearings 67 are arranged next to each other in the vertical direction and interposed between the outer periphery of the left rotation pin 35 and the body 30. The body radial bearings 67 surround the left rotation pin 35 so as to receive load acting in the radial direction orthogonal to the axial direction of the left rotation pin 35. When the left rotation pin 35 is rotated, the left rotation pin 35 touches the body radial bearings 67, which can reduce contact friction between the left rotation pin 35 and the body 30. For example, needle bearings are used as the body radial bearings 67.

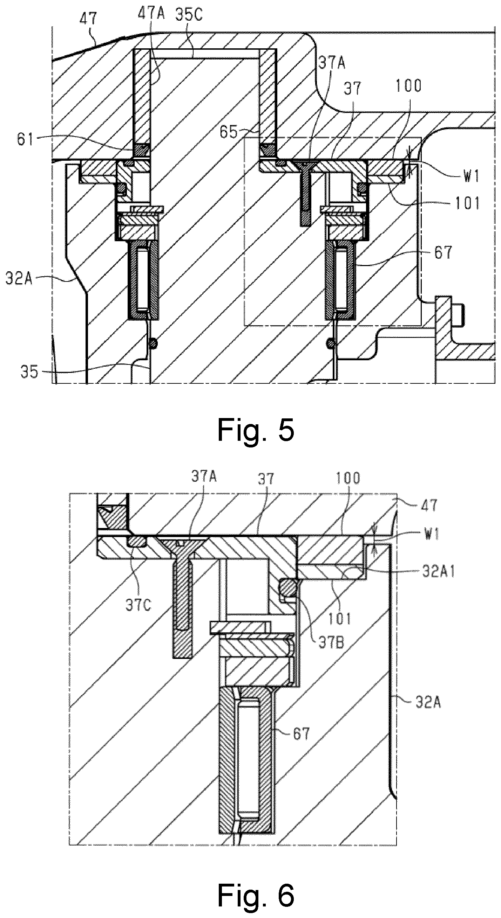

As shown in Figs. 5 and 6, a replaceable member 100 is provided between the upper left lever 47 and the left support 32A. The replaceable member 100 has lower hardness than the upper left lever 47. The replaceable member 100 has lower hardness than the left support 32A. The left support 32A surrounds the upper root portion of the left rotation pin 35, i.e., the root portion of the upper end 35C of the left rotation pin 35. This means that the replaceable member 100 is provided between the periphery of the upper root portion of the left rotation pin 35 and the upper left lever 47. The replaceable member 100 is annular and has an aperture. The left rotation pin 35 penetrates the aperture of the replaceable member 100. An elastic member 101 is provided between the left support 32A and the replaceable member 100. The elastic member 101 is made of at least one of chloroprene rubber, urethane rubber, or silicone rubber. The elastic member 101 is annular and has an aperture. The left rotation pin 35 penetrates the aperture of the elastic member 101. The replaceable member 100 is provided on the left support 32A, and allows the upper left lever 47 to slide thereon. Accordingly, the replaceable member 100, which has lower hardness than the upper left lever 47, wears out.

A lid 37 is provided on the upper root portion of the left rotation pin 35 and configured to restrict the body radial bearing 67 from moving out of position in the axial direction of the left rotation pin 35. The lid 37 is an annular plate member and has an aperture. The edge of the lid 37 projects toward the body radial bearing 67. The lid 37 is fixedly attached to the left rotation pin 35 by a fixture pin 37A. The lid 37 includes an O-ring 37B tightly sealed between the lid 37 and the left support 32A and also includes an O-ring 37C tightly sealed between the lid 37 and the upper left lever 47. The two O-rings 37B and 37C prevent foreign matter from reaching the body radial bearing 67. The lid 37 corresponds to a restricting member.

An annular upper left hosing portion 32A1 is provided in the top portion of the left support 32A. The upper left housing portion 32A1 houses therein the elastic member 101 and the replaceable member 100. A gap W1 is provided between the end of the left support 32A and the upper left lever 47. The replaceable member 100 protrudes beyond the upper left housing portion 32A1, so that it can touch the upper left lever 47. The upper left lever 47 is not in contact with the lid 37 but with the replaceable member 100. This means that, even if the upper left lever 47 is tilted, the upper left lever 47 does not touch the left support 32A. The contact area between the elastic member 101 and the replaceable member 100 is greater than the contact area between the replaceable member 100 and the upper left lever 47.

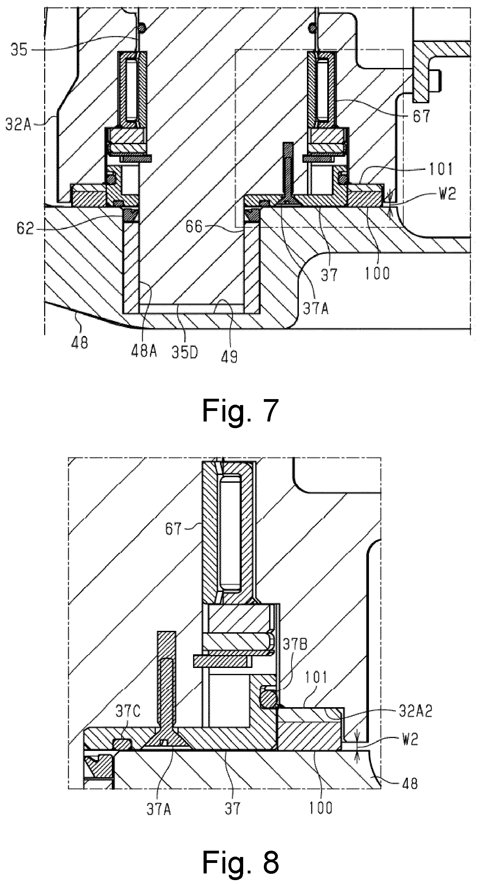

As shown in Figs. 7 and 8, a replaceable member 100 is provided between the lower left lever 48 and the left support 32A. The replaceable member 100 has lower hardness than the lower left lever 48. The replaceable member 100 has lower hardness than the left support 32A. The left support 32A surrounds the lower root portion of the left rotation pin 35, i.e., the root portion of the lower end 35D of the left rotation pin 35. This means that the replaceable member 100 is provided between the periphery of the lower root portion of the left rotation pin 35 and the lower left lever 48. The replaceable member 100 is annular and has an aperture. The left rotation pin 35 penetrates the aperture of the replaceable member 100. An elastic member 101 is provided between the left support 32A and the replaceable member 100. The elastic member 101 is made of at least one of chloroprene rubber, urethane rubber, or silicone rubber. The elastic member 101 is annular and has an aperture. The left rotation pin 35 penetrates the aperture of the elastic member 101. The replaceable member 100 is provided on the left support 32A, and allows the lower left lever 48 to slide thereon. Accordingly, the replaceable member 100, which has lower hardness than the lower left lever 48, wears out.

A lid 37 is provided on the lower root portion of the left rotation pin 35 for restricting the body radial bearing 67 from moving out of position in the axial direction of the left rotation pin 35. The lid 37 is an annular plate member having an aperture. The edge of the lid 37 projects toward the body radial bearing 67. The lid 37 is fixedly attached to the left rotation pin 35 by a fixture pin 37A. The lid 37 includes an O-ring 37B tightly sealed between the lid 37 and the left support 32A and also includes an O-ring 37C tightly sealed between the lid 37 and the lower left lever 48. The two O-rings 37B and 37C prevent foreign matter such as dust from reaching the body radial bearing 67. In other words, the lid 37 also serves as a sealing member for preventing dust. The lid 37 corresponds to a restricting member.

An annular lower left housing portion 32A2 is provided in the bottom portion of the left support 32A. The lower left housing portion 32A2 houses therein the elastic member 101 and the replaceable member 100. A gap W2 is provided between the end of the left support 32A and the lower left lever 48. The replaceable member 100 protrudes beyond the lower left housing portion 32A2, to touch the lower left lever 48. The lower left lever 48 is not in contact with the lid 37 but with the replaceable member 100. This means that, even if the lower left lever 48 is tilted, the lower left lever 48 does not touch the left support 32A. The contact area between the elastic member 101 and the replaceable member 100 is greater than the contact area between the replaceable member 100 and the lower left lever 48.

As noted, the replaceable members 100 are respectively provided (i) between the left support 32A and the upper left lever 47 or the upper portion of the left caliper lever 40, and (ii) between the left support 32A and the lower left lever 48 or the lower portion of the left caliper lever 40.

As shown in Fig, 9, the right rotation pins 36 include an upper right rotation pin 36A and a lower right rotation pin 36B. The upper and lower right rotation pins 36A and 36B are situated coaxially. The upper right rotation pin 36A is inserted into the upper right lever 57. The upper right lever 57 is rotatable relative to the upper right rotation pin 36A. The lower right rotation pin 36B is inserted into the lower right lever 58. The lower right lever 58 is rotatable relative to the lower right rotation pin 36B.

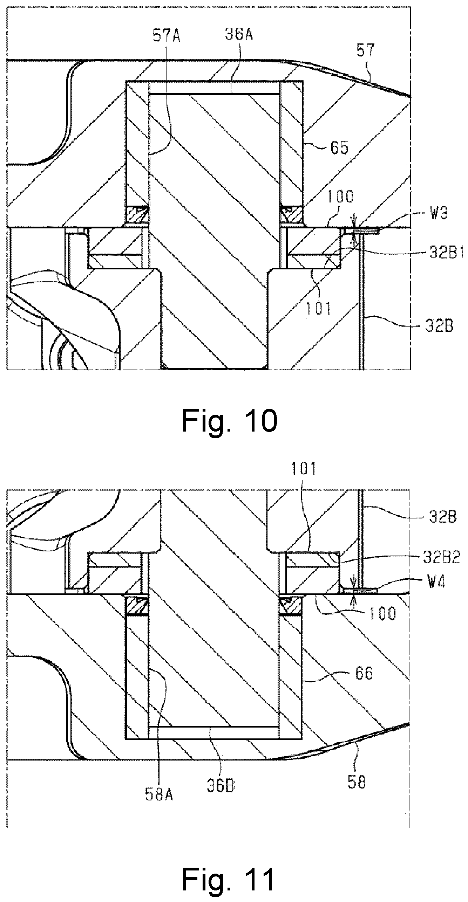

As shown in Fig. 10, an upper end radial bearing 65 is provided in a space 57A defined in the upper left lever 57. The upper end radial bearing 65 surrounds the upper right rotation pin 36A to receive load acting in the radial direction orthogonal to the axial direction of the upper right rotation pin 36A. For example, a needle bearing is used as the upper end radial bearing 65. Thus, when the upper right lever 57 is rotated, the upper right rotation pin 36A touches the upper end radial bearing 65, which can reduce contact friction between the upper right rotation pin 36A and the upper right lever 57.

A replaceable member 100 is provided between the upper right lever 57 and the right support 32B. The replaceable member 100 has lower hardness than the upper right lever 57. The replaceable member 100 has lower hardness than the right support 32B. The right support 32B surrounds the upper root portion of the upper right rotation pin 36A, i.e., the root portion of the end of the upper right rotation pin 36A. This means that the replaceable member 100 is provided between the periphery of the upper root portion of the right rotation pin 36 and the upper right lever 57. The replaceable member 100 is annular and has an aperture. The right rotation pin 36 penetrates the aperture of the replaceable member 100. An elastic member 101 is provided between the right support 32A and the replaceable member 100. The elastic member 101 is made of at least one of chloroprene rubber, urethane rubber, or silicone rubber. The elastic member 101 is annular and has an aperture. The upper right rotation pin 36A penetrates the aperture of the elastic member 101. The replaceable member 100 is provided on the right support 32B, and allows the upper right lever 57 to slide thereon. Accordingly, the replaceable member 100, which has lower hardness than the upper right lever 57, wears out.

An annular upper right housing portion 32B1 is provided in the top portion of the right support 32B. The elastic member 101 and the replaceable member 100 are housed within the upper right housing portion 32B1. A gap W3 is provided between the end of the right support 32B and the upper right lever 57. The replaceable member 100 protrudes beyond the upper right housing portion 32B1 to touch the upper right lever 57. The upper right lever 57 is not in contact with the lid 37 but with the replaceable member 100. This means that, even if the upper right lever 57 is tilted, the upper right lever 57 does not touch the right support 32B. The contact area between the elastic member 101 and the replaceable member 100 is greater than the contact area between the replaceable member 100 and the upper right lever 57.

As shown in Fig. 11, a lower end radial bearing 66 is provided in a space 58A defined in the lower right lever 58. The lower end radial bearing 66 surrounds the lower right rotation pin 36B to receive load acting in the radial direction orthogonal to the axial direction of the lower right rotation pin 36B. For example, a needle bearing is used as the lower end radial bearing 66. Thus, when the lower right lever 58 is rotated, the lower right rotation pin 36B touches the lower end radial bearing 66, which can reduce contact friction between the lower right rotation pin 36B and the lower right lever 58.

A replaceable member 100 is provided between the lower right lever 58 and the right support 32B. The replaceable member 100 has lower hardness than the lower right lever 58. The replaceable member 100 has lower hardness than the right support 32B. The right support 32B surrounds the lower root portion of the lower right rotation pin 36B, i.e., the root portion of the end of the lower right rotation pin 36B. This means that the replaceable member 100 is provided between the periphery of the lower root portion of the right rotation pin 36 and the lower right lever 58. The replaceable member 100 is annular and has an aperture. The right rotation pin 36 penetrates the aperture of the replaceable member 100. An elastic member 101 is provided between the right support 32B and the replaceable member 100. The elastic member 101 is made of at least one of chloroprene rubber, urethane rubber, or silicone rubber. The elastic member 101 is annular and has an aperture. The lower right rotation pin 36B penetrates the aperture of the elastic member 101. The replaceable member 100 is provided on the right support 32B, and allows the lower right lever 58 to slide thereon. Accordingly, the replaceable member 100, which has lower hardness than the lower right lever 58, wears out.

An annular lower right housing portion 32B2 is provided in the bottom portion of the right support 32B. The lower right housing portion 32B2 houses therein the elastic member 101 and the replaceable member 100. A gap W4 is provided between the end of the right support 32B and the lower right lever 58. The replaceable member 100 protrudes beyond the lower right housing portion 32B2, to touch the lower right lever 58. The lower right lever 58 is not in contact with the lid 37 but with the replaceable member 100. This means that, even if the lower right lever 58 is tilted, the lower right lever 58 does not touch the right support 32B. The contact area between the elastic member 101 and the replaceable member 100 is greater than the contact area between the replaceable member 100 and the lower right lever 58.

As noted, the replaceable members 100 are respectively provided (i) between the right support 32B and the upper right lever 57 or the upper portion of the right caliper lever 50, and (ii) between the right support 32B and the lower right lever 58 or the lower portion of the right caliper lever 50.

As shown in Fig. 2, the gap adjustment device 110 adjusts the distance between the base end of the left caliper lever 40 and the base end of the right caliper lever 50 to adjust the gaps between the brake pads 12 and the disc 11. As the brake pads 12 wear off, the gap grows between the brake pads 12 and the disc 11. To deal with this issue, the gap adjustment device 110 increases the distance between the base end of the left caliper lever 40 and the base end of the right caliper lever 50, thereby reducing the distance between the brake pads 12 and the disc 11.

When the amount of movement of the first rod 73 is equal to or greater than a predetermined value, the pulling unit 91 pulls the wire 96. In other words, if the first rod 73 protrudes and the amount of the protrusion reaches a predetermined value, the first rod 73 touches the pulling unit 91, as a result of which the pulling unit 91 rotates and accordingly pulls the wire 96.

As shown in Fig. 1, the gap adjuster 111 includes a first casing 121 and a second casing 122. The first casing 121 connects between the base ends of the upper and lower left levers 47 and 48. The first casing 121 is turnably coupled with the upper and lower left levers 47 and 48 via the bolts 45. The second casing 122 connects between the base ends of the upper and lower right levers 57 and 58. The second casing 122 is turnably coupled with the upper and lower right levers 57 and 58 via the bolts 55.

As shown in Fig. 2, the first casing 121 includes an extension portion 121A having a cylindrical shape and extending toward the second casing 122. A polygonal rod 123 shaped like a polygonal column is fixedly attached to the first casing 121. The polygonal rod 123 extends in the extension direction of the extension portion 121A of the first casing 121.

The base end portion of the polygonal rod 123 protrudes out of the first casing 121. The base end portion of the polygonal rod 123 includes a hexagonal portion 123B shaped like a hexagonal column. The hexagonal portion 123B of the polygonal rod 123 can be manually rotated to adjust the gaps between the brake pads 12 and the disc 11.

A cylindrical screw shaft 124 is fixed to the second casing 122 and extends toward the first casing 121. The screw shaft 124 has a cylindrical space 124A formed therein. The space 124A is open at the first casing 121 side only. The space 124A in the screw shaft 124 receives the polygonal rod 123 inserted therein. The screw shaft 124 has external threads 124B on the outer surface thereof excluding the portion fixed to the second casing 122. The screw shaft 124 is supported by a support spring 122A. The base end portion of the screw shaft 124 has a hexagonal portion 124C shaped like a hexagonal column. The hexagonal portion 124C of the screw shaft 124 can be manually rotated to adjust the gaps between the brake pads 12 and the disc 11. With the above arrangement, the gap adjustment is accessible from both sides of the gap adjuster 111. The gaps thus can be adjusted by a large amount at one time, resulting in increased efficiency and ease of the adjustment during maintenance work.

An adjustment nut 125 shaped like a cylinder is provided on the outer periphery of the screw shaft 124. The inner wall of the adjustment nut 125 partially has internal threads 125A that are configured to engage with the external threads 124B of the screw shaft 124. The adjustment nut 125 rotates relative to the screw shaft 124 while engaging with the external threads 124B of the screw shaft 124. Specifically, as the screw shaft 124 moves away from the polygonal rod 123, the adjustment nut 125 is rotated by the external threads 124B of the screw shaft 124 and the internal threads 125A of the adjustment nut 125.

The adjustment nut 125 is positioned between the extension portion 121A of the first casing 121 and the screw shaft 124. The outer periphery of the adjustment nut 125 has a ridge 125B provided thereon. The ridge 125B projects toward the inner wall of the extension portion 121A of the first casing 121. Between the adjustment nut 125 and the extension portion 121A of the first casing 121, an anti-vibration spring 126 is provided and energizes the ridge 125B toward the first casing 121 in the axial direction of the adjustment nut 125. The anti-vibration spring 126 is formed of a coil spring and is provided on the outer periphery of the adjustment nut 125. Since the ridge 125B of the adjustment nut 125 is energized by the anti-vibration spring 126, this can reduce the effect of vibration. A contact clutch 127 is provided between the adjustment nut 125 and the extension portion 121A of the first casing 121. When the ridge 125B is pushed toward the left caliper lever 40 in the axial direction, the contact clutch 127 contacts the surface of the ridge 125B that is perpendicular to the axial direction to control rotation of the adjustment nut 125. A cylindrical cover 128 covering the first casing 121 is fixedly attached to the second casing 122.

A wire attaching portion 130 to which the wire 96 is connected is provided on a portion of the screw shaft 124 closer to the first casing. A one-way clutch 131 is provided between the adjustment nut 125 and the extension portion 121A of the first casing 121. The wire attachment portion 130 is fixedly attached to the one-way clutch 131. The one-way clutch 131 and the wire attachment portion 130 can integrally rotate. The one-way clutch 131 permits the adjustment nut 125 to rotate such that the gap adjuster 111 is elongated but prevents the adjustment nut 125 from rotating such that the gap adjuster 111 is shortened. A spring 132 is attached to the one-way clutch 131. If the wire 96 is pulled by the pulling unit 91, the one-way clutch 131 and the wire attachment portion 130 rotate clockwise as seen from the left side, so that the spring 132 is compressed. If the wire 96 is released from being pulled, the energizing force from the spring 132 rotates the one-way clutch 131 and the wire attachment portion 130, as well as the adjustment nut 125, in a reversed direction (anti-clockwise), elongating the gap adjuster 111.

The following now describes how the brake caliper device 20 works. With additional reference to Fig. 2, the following first describes how the brake caliper device 20 and the gap adjustment device 110 work before the brake pads 12 wear out.

As shown in Fig. 2, the service brake can be actuated by feeding compressed air into the first space 75 in the service brake cylinder 70 of the cylinder device 15 of the brake caliper device 20. The first rod 73 of the service brake cylinder 70 moves in such a direction that it projects from the first cylinder chamber 71 along with the first piston 72, thereby driving the operation lever 35A clockwise via the roller 35B. Here, if the brake pads 12 have not worn off very much and the amount of movement (protrusion) of the first rod 73 is thus less than a predetermined value, the first rod 73 does not touch the pulling unit 91.

As the first rod 73 moves in such a direction that it projects from the first cylinder chamber 71, the operation lever 35A rotates clockwise along with the left rotation pin 35. The clockwise rotation of the left rotation pin 35 causes the left caliper lever 40 to rotate about the rotational axis 44 in such a direction that the left brake pad 12 contacts the disc 11, as a result of which the left brake pad 12 contacts the disc 11. The replaceable and elastic members 100 and 101 are provided between the left caliper lever 40 and the left support 32A. Accordingly, as the left caliper lever 40 rotates, it touches the replaceable members 100. The replaceable members 100 may wear out as the left caliper lever 40 is brought into contact with the replaceable members 100. In this case, the replaceable members 100 can be replaced with new ones, so that the left caliper lever 40 can be brought into contact with the replaceable members 100 in an unchanged manner.

After the left brake pad 12 contacts the disc 11, the left caliper lever 40 rotates clockwise about the pad rotation pins 43. When the left caliper lever 40 rotates about the pad rotation pins 43, the right caliper lever 50 rotates anti-clockwise about the right rotation pins 36 via the rotational axis 44, the gap adjuster 111 and the rotational axis 54, as a result of which the right brake pad 12 contacts the disc 11. Thus, the disc 11 is pressed on both sides by the left and right brake pads 12, which restricts the rotation of the disc 11. The braking is adjusted by changing the pressing force applied to the brake pads 12. The replaceable and elastic members 100 and 101 are provided between the right caliper lever 50 and the right support 32B. Accordingly, as the right caliper lever 50 rotates, it touches the replaceable members 100. The replaceable members 100 may wear out as the right caliper lever 50 is brought into contact with the replaceable members 100. In this case, the replaceable members 100 can be replaced with new ones, so that the right caliper lever 50 can be brought into contact with the replaceable members 100 in an unchanged manner.

When the compressed air is discharged from the second space 85 of the parking brake cylinder 80 and the second rod 83 projects from the second cylinder chamber 81, the second rod 83 pushes the first piston 72 and the first rod 73, resulting in the same operation as when the first rod 73 projects from the first cylinder chamber 71.

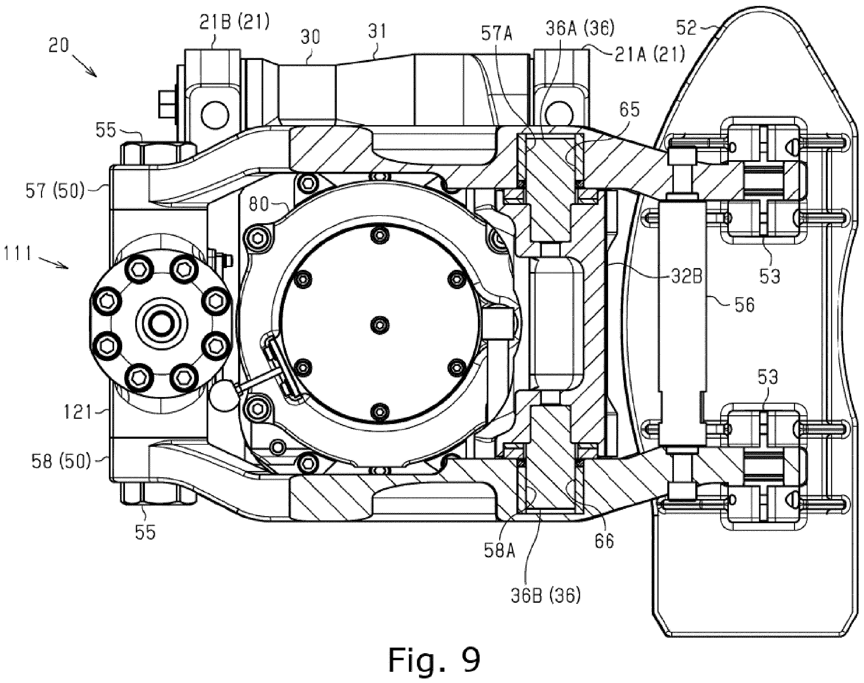

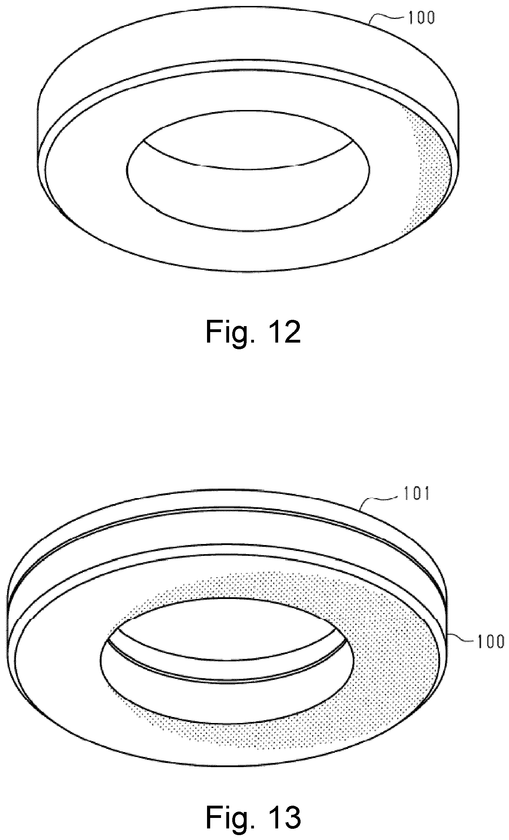

When the left and right brake pads 12 press the disc 11 rotating downward relative to the brake pads 12, the brake pads 12 follow the disc 11 and move in the rotational direction of the disc 11. As shown in Fig. 4, as the left brake pad 12 moves downward together with the disc 11, the left caliper lever 40 is tilted. The elastic members 101 are deformed in compliance with the tilted left caliper lever 40, which can reduce a decrease in contact area between the left caliper lever 40 and the replaceable members 100. Fig. 12 shows a case where only the replaceable members 100 are provided, and the dots indicate the contact area between the left caliper lever 40 and the replaceable members 100 when the left caliper lever 40 is tilted. As the left caliper lever 40 is tilted, the contact area decreases, so that the surface pressure rises and the load is applied locally. Fig. 13, on the other hand, shows a case where the replaceable elastic members 100 and 101 are provided, and the dots indicate the contact area between the left caliper lever 40 and the replaceable members 100 when the left caliper lever 40 is tilted. As the left caliper lever 40 is tilted, the contact area between the left caliper lever 40 and the replaceable members 100 decreases, but the elastic member 101 can contribute to reduce the decrease in contact area, thereby reducing the rise in surface pressure. Since the left caliper lever 40 is brought into contact with the replaceable members 100 in an unchanged manner, the replaceable members 100 can be prevented from unevenly wearing out. As a result, the replaceable member 100 can be saved from being replaced frequently. In addition, the outer periphery of the upper end 35C of the left rotation pin 35 is brought into contact with the upper end radial bearing 65 provided in the space 47A, so that the contact friction is reduced. The outer periphery of the lower end 35D of the left rotation pin 35 is brought into contact with the lower end radial bearing 66 provided in the space 48A, so that the contact friction is reduced. As shown in Fig. 9, as the right brake pad 12 moves downward together with the disc 11, the right caliper lever 50 is tilted. The elastic members 101 are deformed in compliance with the tilted right caliper lever 50, which can reduce a decrease in contact area between the right caliper lever 50 and the replaceable members 100. As is the case of the left caliper lever 40, when the right caliper lever 50 is tilted, the contact area between the right caliper lever 50 and the replaceable members 100 decreases, but the elastic members 101 can contribute to reduce the decrease in contact area, thereby reducing the rise in surface pressure. Since the right caliper lever 50 is brought into contact with the replaceable members 100 in an unchanged manner, the replaceable members 100 can be prevented from unevenly wearing out. As a result, the replaceable members 100 can be saved from being replaced frequently. In addition, the outer periphery of the upper right rotation pin 36A is brought into contact with the upper end radial bearing 65 provided in the space 57A, so that the contact friction is reduced. The outer periphery of the lower right rotation pin 36B is brought into contact with the lower end radial bearing 66 provided in the space 58A, so that the contact friction is reduced.

When the left and right brake pads 12 press the disc 11 rotating upward relative to the brake pads 12, the brake pads 12 follow the disc 11 and move in the rotational direction of the disc 11. As shown in Fig. 4, as the left brake pad 12 moves upward together with the disc 11, the left caliper lever 40 is tilted. The elastic members 101 are deformed in compliance with the tilted left caliper lever 40, which can reduce a decrease in contact area between the left caliper lever 40 and the replaceable members 100. As is the above case where the brake pads 12 move downward, when the left caliper lever 40 is tilted, the contact area between the left caliper lever 40 and the replaceable members 100 decreases, but the elastic members 101 can contribute to reduce the decrease in contact area, thereby reducing the rise in surface pressure. Since the left caliper lever 40 is brought into contact with the replaceable members 100 in an unchanged manner, the replaceable members 100 can be prevented from unevenly wearing out. As a result, the replaceable members 100 can be saved from being replaced frequently. In addition, the outer periphery of the upper end 35C of the left rotation pin 35 is brought into contact with the upper end radial bearing 65 provided in the space 47A, so that the contact friction is reduced. The outer periphery of the lower end 35D of the left rotation pin 35 is brought into contact with the lower end radial bearing 66 provided in the space 48A, so that the contact friction is reduced. As shown in Fig. 9, as the right brake pad 12 moves upward together with the disc 11, the right caliper lever 50 is tilted. The elastic members 101 are deformed in compliance with the tilted right caliper lever 50, which can reduce a decrease in contact area between the right caliper lever 50 and the replaceable members 100. As is the above case where the brake pads 12 move downward, when the right caliper lever 50 is tilted, the contact area between the right caliper lever 50 and the replaceable members 100 decreases, but the elastic members 101 can contribute to reduce the decrease in contact area, thereby reducing the rise in surface pressure. Since the right caliper lever 50 is brought into contact with the replaceable members 100 in an unchanged manner, the replaceable members 100 can be prevented from unevenly wearing out. As a result, the replaceable members 100 can be saved from being replaced frequently. In addition, the outer periphery of the upper right rotation pin 36A is brought into contact with the upper end radial bearing 65 provided in the space 57A, so that the contact friction is reduced. The outer periphery of the lower right rotation pin 36B is brought into contact with the lower end radial bearing 66 provided in the space 58A, so that the contact friction is reduced.

The following now describes how the brake caliper 20 and the gap adjustment device 110 operate after the brake pads 12 have worn out. Irrespective of whether or not the brake pads 12 have worn out, the service brake cylinder 70 operates in the same manner with compressed air fed thereto. The amount of movement of the first rod 73, however, increases as the amount of wear of the brake pads 12 increases. If the amount of wear of the brake pads 12 increases to such an extent that the amount of movement of the first rod 73 becomes equal to or greater than a predetermined value, the gap adjustment device 110 comes into operation. Specifically, the gap adjuster 111 is elongated to shorten the gaps between the brake pads 12 and the disc 11.

If the amount of movement of the first rod 73 becomes equal to or greater than a predetermined value, the tip end of the first rod 73 touches the pulling unit 91, as a result of which the pulling unit 91 rotates to pull the wire 96. If the wire 96 is pulled, the wire attachment portion 130 rotates clockwise together with the one-way clutch 131. Here, if the first rod 73 has moved a predetermined amount or more, this means that the gaps between the brake pads 12 and the disc 11 are equal to or greater than a prescribed value.

Subsequently, in the brake caliper device 20, the left brake pad 12 and the right brake pad 12 sandwich the disc 11 to apply a compressive force to the gap adjuster 111. In this case, the screw shaft 124 tends to rotate the adjustment nut 125 in the direction for shortening. Here, the rotation of the adjustment nut 125 is restricted by the frictional force between the contact clutch 127 and the ridge 125B of the adjustment nut 125 and by the one-way clutch 131. Therefore, the screw shaft 124 does not move in the direction for shortening, and the sandwiching force exerted by the brake caliper device 20 is maintained, so that a braking force is generated.

Subsequently, in the brake caliper device 20, feeding of the compressed air to the service brake cylinder 70 is stopped to release the brake. In this case, the first rod 73 returns to the first cylinder chamber 71. This means that the first rod 73 no longer touches the pulling unit 91 and that the pulling unit 91 no longer pulls the wire 96. If the wire 96 is released from being pulled, the energizing force from the spring 132 rotates the one-way clutch 131 and the wire attachment portion 130, as well as the adjustment nut 125, in the reversed direction (anti-clockwise). Here, the one-way clutch 131 does not rotate in the direction for elongation. The one-way clutch 131 thus rotates anti-clockwise together with the adjustment nut 125. This enlarges the entire length of the gap adjuster 111, resulting in a larger distance between the base end portion of the left caliper lever 40 and the base end portion of the right caliper lever 50 and smaller gaps between the brake pads 12 and the disc 11.

Advantageous effects of the first embodiment will be now described.
(1-1) As the caliper levers 40 and 50 rotate or braking causes the brake pads 12 to move together with the disc 11, the caliper levers 40 and 50 touch the replaceable members 100, which have lower hardness than the caliper levers 40 and 50, and the replaceable members 100 thus wear out. The replaceable members 100 can be replaced more easily. When the caliper levers 40 and 50 touch the body 30, the caliper levers 40 and 50 or the body 30 may be damaged. Accordingly, the components of the brake caliper device 20 relating to the present embodiment can be replaced more easily.

(1-2) As the caliper levers 40 and 50 rotate or braking causes the brake pads 12 to move together with the disc 11, the caliper levers 40 and 50 or the body 30 touches the replaceable members 100, which have lower hardness than the caliper levers 40 and 50 and the body 30, and the replaceable members 100 thus wear out. The replaceable members 100 can be replaced more easily. When the caliper levers 40 and 50 touch the body 30, the caliper levers 40 and 50 or the body 30 may be damaged. Accordingly, the components of the brake caliper device 20 relating to the present embodiment can be replaced more easily.

(1-3) The body 30, which holds the cylinder device 15, can not be easily replaced. Since the replaceable members 100 wear out, the body 30 can be saved from being replaced.
(1-4) The left and right rotation pins 35 and 36, which respectively support the left and right caliper levers 40 and 50, can not be replaced easily. Since the replaceable members 100 wear out, this can save the left and right rotation pins 35 and 36 from being replaced.

(1-5) The caliper levers 40 and 50 are not in contact with the lid 37 but with the replaceable members 100. This arrangement can prevent the lid 37 from wearing out.

(1-6) The annular replaceable members 100, through which the left and right rotation pins 35 and 36 extend, are disposed between (i) the root portions of the ends of the left and right rotation pins 35 and 36 and (ii) the caliper levers 40 and 50. As arranged in this manner, the replaceable members 100 do not come off the left and right rotation pins 35 and 36 and can be placed in position easily.

(1-7) The replaceable members 100 are interposed between (i) the body 30 and (ii) the upper and lower portions of the caliper levers 40 and 50. The replaceable members 100 are in contact with the upper and lower portions of the caliper levers 40 and 50 and thus wear out. The replaceable members 100 can be replaced more easily. When the caliper levers 40 and 50 touch the body 30, the caliper levers 40 and 50 or the body 30 may be damaged. Accordingly, the components of the brake caliper device 20 relating to the present embodiment can be replaced more easily.

(1-8) The elastic members 101 are provided between the replaceable members 100 and the body 30. When the caliper levers 40 and 50 are displaced in any directions other than the rotating direction relative to the body 30, the caliper levers 40 and 50 remain in contact with the body 30 in an unchanged manner as the elastic members 101 are deformed. In this manner, the replaceable members 100 can be prevented from unevenly wearing out. As a result, the replaceable members 100 can be saved from being replaced frequently.

(1-9) The annular replaceable and elastic members 100 and 101, through which the left and right rotation pins 35 and 36 extend, are disposed between (i) the root portions of the ends of the left and right rotation pins 35 and 36 and (ii) the caliper levers 40 and 50. As arranged in this manner, the replaceable and elastic members 100 and 101 do not come off the left and right rotation pins 35 and 36 and can be placed in position easily.

(1-10) The elastic members 101 are made of at least one of chloroprene rubber, urethane rubber, or silicone rubber and are thus elastic while being also highly resistant against water and chemicals.
(1-11) The contact area between the elastic members 101 and the replaceable members 100 is greater than the contact area between the replaceable member 100 and the caliper levers 40 and 50. Accordingly, the present embodiment can avoid the case where the replaceable members 100 touch the caliper levers 40 and 50 without the influence of the elastic members 101.

### <Second Embodiment

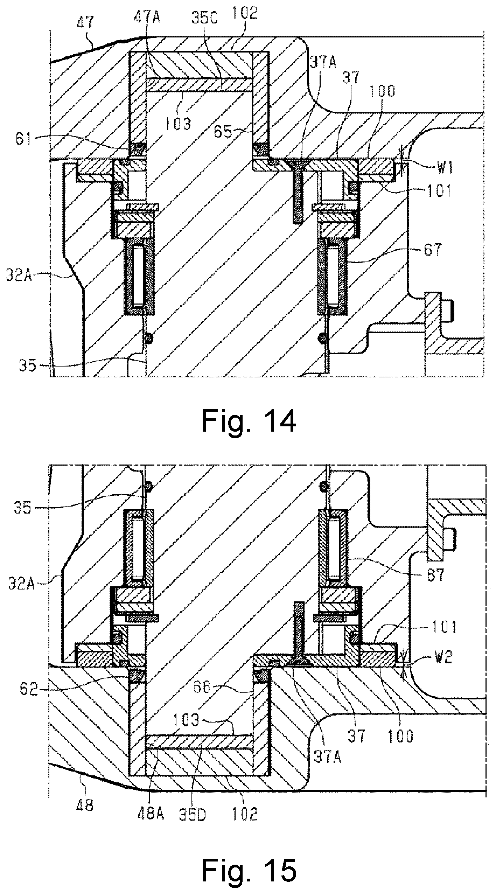

With reference to Figs. 14 to 17, a brake caliper device relating to a second embodiment will now be described. The second embodiment is different from the first embodiment in that replaceable members are provided between (i) the upper and lower portions of the caliper levers and (ii) the ends of the pins. The following description will be focused on the differences from the first embodiment.

As shown in Fig. 14, a replaceable member 102 is provided between the upper left lever 47 and the upper end 35C of the left rotation pin 35. The replaceable member 102 has lower hardness than the upper left lever 47. The replaceable member 102 has lower hardness than the left rotation pin 35. An elastic member 103 is provided between the left rotation pin 35 and the replaceable member 102. The elastic member 103 is made of at least one of chloroprene rubber, urethane rubber, or silicone rubber. The replaceable member 102 and the upper left lever 47 are slidable relative to each other. Accordingly, the replaceable member 102, which has lower hardness than the upper left lever 47, wears out.

As shown in Fig. 15, a replaceable member 102 is provided between the lower left lever 48 and the lower end 35D of the left rotation pin 35. The replaceable member 102 has lower hardness than the lower left lever 48. The replaceable member 102 has lower hardness than the left rotation pin 35. An elastic member 103 is provided between the left rotation pin 35 and the replaceable member 102. The elastic member 103 is made of at least one of chloroprene rubber, urethane rubber, or silicone rubber. The replaceable member 102 and the lower left lever 48 are slidable relative to each other. Accordingly, the replaceable member 102, which has lower hardness than the lower left lever 48, wears out.

As noted, the replaceable members 102 are respectively provided (i) between the right support 32B and the upper right lever 57 or the upper portion of the right caliper lever 50, and (ii) between the right support 32B and the lower right lever 58 or the lower portion of the right caliper lever 50.

As the left caliper lever 40 rotates, the left caliper lever 40 touches the replaceable members 102. The replaceable members 102 may wear out as they come in contact with the left caliper lever 40. In this case, the replaceable members 102 can be replaced with new ones, so that the replaceable members 102 can be brought into contact with the left caliper lever 40 in an unchanged manner.

When the left caliper lever 40 is tilted relative to the body 30, the elastic members 103 are deformed in compliance with the tilted left caliper lever 40, which can reduce a decrease in contact area between the left caliper lever 40 and the replaceable members 102. Since the left caliper lever 40 remains in contact with the replaceable members 102 in an unchanged manner, the replaceable members 102 can be prevented from unevenly wearing out. As a result, the replaceable members 102 can be saved from being replaced frequently.

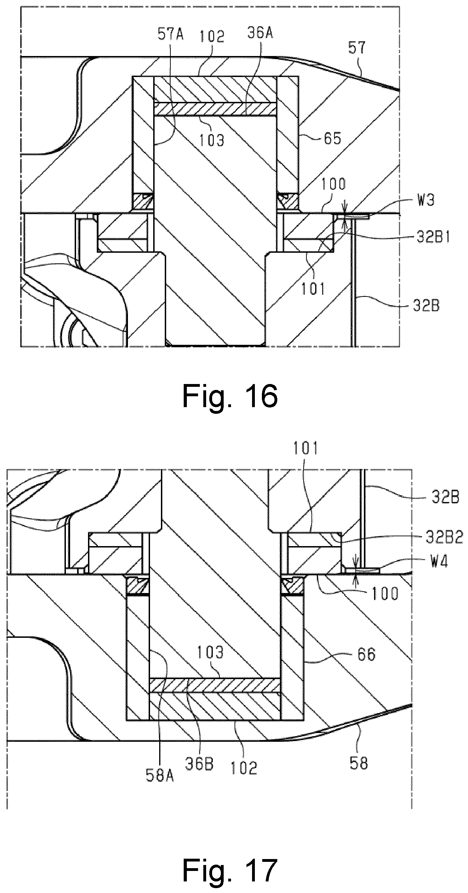

As shown in Fig. 16, a replaceable member 102 is provided between the upper right lever 57 and the right rotation pin 36. The replaceable member 102 has lower hardness than the right rotation pin 36. The replaceable member 102 has lower hardness than the upper right lever 57. An elastic member 103 is provided between the right rotation pin 36 and the replaceable member 102. The elastic member 103 is made of at least one of chloroprene rubber, urethane rubber, or silicone rubber. The replaceable member 102 and the upper right lever 57 are slidable relative to each other. Accordingly, the replaceable member 102, which has lower hardness than the upper right lever 57, wears out.

As shown in Fig. 17, a replaceable member 102 is provided between the lower right lever 58 and the right rotation pin 36. The replaceable member 102 has lower hardness than the right rotation pin 36. The replaceable member 102 has lower hardness than the lower right lever 58. An elastic member 103 is provided between the right rotation pin 36 and the replaceable member 102. The elastic member 103 is made of at least one of chloroprene rubber, urethane rubber, or silicone rubber. The replaceable member 102 and the lower right lever 58 are slidable relative to each other. Accordingly, the replaceable member 102, which has lower hardness than the lower right lever 58, wears out.

As noted, the replaceable members 102 are respectively provided (i) between the right support 32B and the upper right lever 57 or the upper portion of the right caliper lever 50, and (ii) between the right support 32B and the lower right lever 58 or the lower portion of the right caliper lever 50.

As the right caliper lever 50 rotates, the right caliper lever 50 touches the replaceable members 102. The replaceable members 102 may wear out as they come in contact with the right caliper lever 50. In this case, the replaceable members 102 can be replaced with new ones, so that the right caliper lever 50 can remain in contact with the replaceable members 102 in an unchanged manner.

When the right caliper lever 50 is tilted relative to the body 30, the elastic members 103 are deformed in compliance with the tilted right caliper lever 50, which can reduce a decrease in contact area between the right caliper lever 50 and the replaceable members 102. Since the right caliper lever 50 remains in contact with the replaceable members 102 in an unchanged manner, the replaceable members 102 can be prevented from unevenly wearing out. As a result, the replaceable members 102 can be saved from being replaced frequently.

Advantageous effects of the second embodiment will be now described. The following advantageous effects are obtained in addition to the advantageous effects (1-1) to (1-5), (1-7) and (1-8) and (1-10) of the first embodiment.
(2-1) The replaceable members are provided (i) between the caliper levers 40 and 50 and the supports 32A and 32B, and (ii) between the caliper levers 40 and 50 and the rotation pins 35 and 36. Accordingly, both the supports 32A and 32B and the rotation pins 35 and 35 can avoid wearing off.

### <Third Embodiment

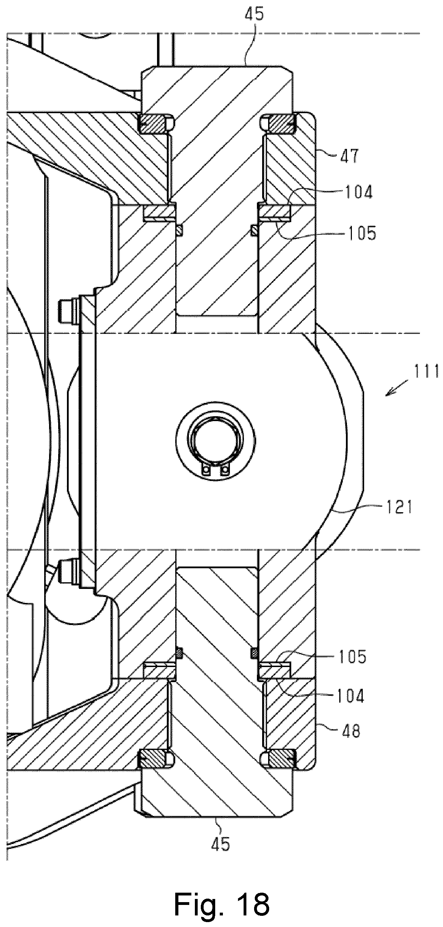

With reference to Fig. 18, a brake caliper device relating to a third embodiment will now be described. The third embodiment is different from the first embodiment in that replaceable members are provided at connecting portions between (i) the upper and lower portions of the caliper levers and (ii) the gap adjuster. The following description will be focused on the differences from the first embodiment.

As shown in Fig. 18, a replaceable member 104 is provided between the upper left lever 47 and the first casing 121 of the gap adjuster 111. The gap adjuster 111 corresponds to a support. The replaceable member 104 has lower hardness than the first casing 121. The replaceable member 104 has lower hardness than the upper left lever 47. The first casing 121 surrounds the upper root portion of the bolt 45, i.e., the root portion of the end of the upper bolt 45. This means that the replaceable member 104 is provided between the periphery of the upper root portion of the bolt 45 and the upper left lever 47. The bolt 45 corresponds to a pin. The replaceable member 104 is annular and has an aperture. The bolt 45 penetrates the aperture of the replaceable member 104. An elastic member 105 is provided between the first casing 121 and the replaceable member 104. The elastic member 105 is made of at least one of chloroprene rubber, urethane rubber, or silicone rubber. The elastic member 105 is annular and has an aperture. The bolt 45 penetrates the aperture of the elastic member 105. The replaceable member 104 is provided on the first casing 121, and allows the upper left lever 47 to slide thereon. Accordingly, the replaceable member 104, which has lower hardness than the upper left lever 47, wears out.

A replaceable member 104 is provided between the lower left lever 48 and the first casing 121 of the gap adjuster 111. The gap adjuster 111 corresponds to a support. The replaceable member 104 has lower hardness than the first casing 121. The replaceable member 104 has lower hardness than the lower left lever 48. The first casing 121 surrounds the lower root portion of the bolt 45, i.e., the root portion of the end of the lower bolt 45. This means that the replaceable member 104 is provided between the periphery of the lower root portion of the bolt 45 and the lower left lever 48. The bolt 45 corresponds to a pin. The replaceable member 104 is annular and has an aperture. The bolt 45 penetrates the aperture of the elastic member 104. An elastic member 105 is provided between the first casing 121 and the replaceable member 104. The elastic member 105 is made of at least one of chloroprene rubber, urethane rubber, or silicone rubber. The elastic member 105 is annular and has an aperture. The bolt 45 penetrates the aperture of the elastic member 105. The replaceable member 104 is provided on the first casing 121, and allows the lower left lever 48 to slide thereon. Accordingly, the replaceable member 104, which has lower hardness than the lower left lever 48, wears out.

Similarly, a replaceable member 104 and an elastic member 105 are provided between the upper right lever 57 and the second casing 122 of the gap adjuster 111. A replaceable member 104 and an elastic member 105 are provided between the lower right lever 58 and the second casing 122 of the gap adjuster 111.

As the caliper levers 40 and 50 rotate, the caliper levers 40 and 50 tough the replaceable members 104. The replaceable members 104 may wear out as they come in contact with the caliper levers 40 and 50. In this case, the replaceable members 104 can be replaced with new ones, so that the caliper levers 40 and 50 can remain in contact with the replaceable members 104 in an unchanged manner.

When the caliper levers 40 and 50 are tilted relative to the gap adjuster 111, the elastic members 105 are deformed in compliance with the tilted caliper levers 40 and 50, which can reduce a decrease in contact area between the caliper levers 40 and 50 and the replaceable members 104. Since the caliper levers 40 and 50 remain in contact with the replaceable members 104 in an unchanged manner, the replaceable members 104 can be prevented from unevenly wearing out. As a result, the replaceable members 104 can be saved from being replaced frequently.

Advantageous effects of the third embodiment will be now described. The following advantageous effects are obtained in addition to the advantageous effects (1-1) to (1-11) of the first embodiment.
(3-1) The gap adjuster 111 cannot be replaced easily. Since the replaceable members 104 wear out, the gap adjuster 111 can be saved from being replaced.

### <Other Embodiments>

The foregoing embodiments can be modified as described below. The above embodiments and the following modifications can be implemented in combination to the extent where they are technically consistent with each other.

In the first and second embodiments described above, the contact area between the elastic members and the replaceable members is greater than the contact area between the replaceable members and the caliper levers 40 and 50. The contact area between the elastic members and the replaceable members, however, may be less than the contact area between the replaceable members and the caliper levers 40 and 50.

In the foregoing embodiments, the replaceable and elastic members are shaped annularly with an aperture. The replaceable and elastic members, however, may not be shaped annularly, but may be configured in any manner as long as they are positioned between the caliper levers 40 and 50 and the support.

In the foregoing embodiments, the replaceable members are provided between the body 30 and the upper and lower portions of the caliper levers 40 and 50. The replaceable members, however, may be provided between the body 30 and only one of the upper and lower portions of the caliper levers 40 and 50. The upper portions of the caliper levers 40 and 50 are subject to their own weight and the reaction force from the disc when braking is applied. This means that the upper portions of the caliper levers 40 and 50 are subject to greater load. Accordingly, the replaceable members are preferably provided between the body 30 and at least the upper portions of the caliper levers 40 and 50. If the disc is rotatable only in one direction, the replaceable members may be provided between the body 30 and only one of the upper and lower portions of the caliper levers 40 and 50, which is determined by the rotating direction of the disc. Specifically speaking, if the brake pads move downward together with the disc 11, the replaceable members are provided on the upper portions of the caliper levers 40 and 50. If the brake pads move upward together with the disc 11, the replaceable members are preferably provided on the lower portions of the caliper levers 40 and 50.

In the foregoing embodiments, the elastic members may be elastically deformable springs. The rotation pins 35 and 36 may penetrate the springs, or a plurality of annular springs may surround each of the rotation pins 35 and 36. The elastic members may be alternatively spherical bearings.

The foregoing embodiments may be implemented without the elastic members. In this case, the replaceable members may unevenly wear out, but the caliper levers 40 and 50 can be saved from being replaced by replacing the replaceable members.

In the foregoing embodiments, the upper end radial bearings 65 are provided in the spaces 47A and 57A. The upper end radial bearings 65, however, may be omitted. In the foregoing embodiments, the lower end radial bearings 66 are provided in the spaces 48A and 58A. The lower end radial bearings 66, however, may be omitted.

The foregoing embodiments may be implemented without the lid 37. The foregoing embodiments may be implemented without the gaps W1, W2, W3 and W4. In the second embodiment, the replaceable members are provided (i) between the caliper levers 40 and 50 and the supports 32A and 32B, and (ii) between the caliper levers 40 and 50 and the rotation pins 35 and 36. The replaceable members, however, may be provided only between the caliper levers 40 and 50 and the rotation pins 35 and 36.

In the foregoing embodiments, the left rotation pin 35 penetrates the body 30. Alternatively, the left rotation pin 35 does not have to penetrate the body 30 provided that the body 30 is configured to hold the left rotation pin 35.

In the first and second embodiments, the left rotation pin 35 and the body 30 may be combined into a single unit piece. In this case, the replaceable members are penetrated by the left rotation pin, which is an integral part of the body 30. In the first and second embodiments, the right rotation pins 36, including the upper and lower right rotation pins 36A and 36B, and the body 30 may be combined into a single unit piece. In this case, the replaceable members are penetrated by the right rotation pins, which constitute an integral part of the body 30.

In the first embodiment, the left rotation pin 35 may be integrated with at least one of the upper left lever 47 or the lower left lever 48. In this case, the replaceable members are penetrated by the left rotation pin, which is an integral part of the body 30.

In the first embodiment, the upper right rotation pin 36A and the upper right lever 57 may be integrated together. The lower right rotation pin 36B and the lower right lever 58 may be integrated together. In these cases, the replaceable members are penetrated by the upper and lower right rotation pins, which are respectively integrated with the upper and lower right levers 57 and 58.

In the first and second embodiments described above, the replaceable members 100 have lower hardness than the upper left lever 47 and the left support 32A. Since the replaceable members 100 are slidable relative to the upper left lever 47, however, the replaceable members 100 may only be required to have lower hardness than the upper left lever 47. If the replaceable members 100 are slidable relative to the left support 32A, the replaceable members 100 may only be required to have lower hardness than the left support 32A. In this case, the elastic members 101 are provided between the upper left lever 47 and the replaceable members 100.

In the first and second embodiments described above, the replaceable members 100 have lower hardness than the lower left lever 48 and the left support 32A. Since the replaceable members 100 are slidable relative to the lower left lever 48, however, the replaceable members 100 may only be required to have lower hardness than the lower left lever 48. If the replaceable members 100 are slidable relative to the left support 32A, the replaceable members 100 may only be required to have lower hardness than the left support 32A. In this case, the elastic members 101 are provided between the lower left lever 48 and the replaceable members 100.

In the first and second embodiments described above, the replaceable members 100 have lower hardness than the upper right lever 57 and the right support 32B. Since the replaceable members 100 are slidable relative to the upper right lever 57, however, the replaceable members 100 may only be required to have lower hardness than the upper right lever 57. If the replaceable members 100 are slidable relative to the right support 32B, the replaceable members 100 may only be required to have lower hardness than the right support 32B. In this case, the elastic members 101 are provided between the upper right lever 57 and the replaceable members 100.

In the first and second embodiments described above, the replaceable members 100 have lower hardness than the lower right lever 58 and the right support 32B. Since the replaceable members 100 are slidable relative to the lower right lever 58, however, the replaceable members 100 may only be required to have lower hardness than the lower right lever 58. If the replaceable members 100 are slidable relative to the right support 32B, the replaceable members 100 may only be required to have lower hardness than the right support 32B. In this case, the elastic member 101 is provided between the lower right lever 58 and the replaceable members 100.

In the second embodiment described above, the replaceable members 102 have lower hardness than the upper left lever 47 and the left rotation pin 35. Since the replaceable members 102 are slidable relative to the upper left lever 47, however, the replaceable members 102 may only be required to have lower hardness than the upper left lever 47. If the replaceable members 102 are slidable relative to the left rotation pin 35, the replaceable members 102 may only be required to have lower hardness than the left rotation pin 35. In this case, the elastic members 103 are provided between the upper left lever 47 and the replaceable members 102.

In the second embodiment described above, the replaceable members 102 have lower hardness than the lower left lever 48 and the left rotation pin 35. Since the replaceable members 102 are slidable relative to the lower left lever 48, however, the replaceable members 102 may only be required to have lower hardness than the lower left lever 48. If the replaceable members 102 are slidable relative to the left rotation pin 35, the replaceable members 102 may only be required to have lower hardness than the left rotation pin 35. In this case, the elastic members 103 are provided between the lower left lever 48 and the replaceable members 102.

In the second embodiment described above, the replaceable members 102 have lower hardness than the upper right lever 57 and the right rotation pins 36. Since the replaceable members 102 are slidable relative to the upper right lever 57, however, the replaceable members 102 may only be required to have lower hardness than the upper right lever 57. If the replaceable members 102 are slidable relative to the right rotation pins 36, the replaceable members 102 may only be required to have lower hardness than the right rotation pins 36. In this case, the elastic members 103 are provided between the upper right lever 57 and the replaceable members 102.

In the second embodiment described above, the replaceable members 102 have lower hardness than the lower right lever 58 and the right rotation pins 36. Since the replaceable members 102 are slidable relative to the lower right lever 58, however, the replaceable member 102 may only be required to have lower hardness than the lower right lever 58. If the replaceable members 102 are slidable relative to the right rotation pins 36, the replaceable members 102 may only be required to have lower hardness than the right rotation pins 36. In this case, the elastic members 103 are provided between the lower right lever 58 and the replaceable members 102.

In the third embodiment described above, the replaceable members 104 have lower hardness than the upper left lever 47 and the first casing 121. Since the replaceable members 104 are slidable relative to the upper left lever 47, however, the replaceable members 104 may only be required to have lower hardness than the upper left lever 47. If the replaceable members 104 are slidable relative to the first casing 121, the replaceable members 104 may only be required to have lower hardness than the first casing 121. In this case, the elastic members 105 are provided between the upper left lever 47 and the replaceable members 104.

In the third embodiment described above, the replaceable members 104 have lower hardness than the lower left lever 48 and the first casing 121. Since the replaceable members 104 are slidable relative to the lower left lever 48, however, the replaceable members 104 may only be required to have lower hardness than the lower left lever 48. If the replaceable members 104 are slidable relative to the first casing 121, the replaceable members 104 may only be required to have lower hardness than the first casing 121. In this case, the elastic members 105 are provided between the lower left lever 48 and the replaceable members 104.

In the third embodiment described above, the replaceable members 104 have lower hardness than the upper right lever 57 and the second casing 122. Since the replaceable members 104 are slidable relative to the upper right lever 57, however, the replaceable members 104 may only be required to have lower hardness than the upper right lever 57. If the replaceable members 104 are slidable relative to the second casing 122, the replaceable members 104 may only be required to have lower hardness than the second casing 122. In this case, the elastic members 105 are provided between the upper right lever 57 and the replaceable members 104.

In the third embodiment described above, the replaceable members 104 have lower hardness than the lower right lever 58 and the second casing 122. Since the replaceable members 104 are slidable relative to the lower right lever 58, however, the replaceable members 104 may only be required to have lower hardness than the lower right lever 58. If the replaceable members 104 are slidable relative to the second casing 122, the replaceable members 104 may only be required to have lower hardness than the second casing 122. In this case, the elastic members 105 are provided between the lower right lever 58 and the replaceable members 104.

The foregoing embodiments employ the cylinder device 15 as the actuator, but may use other devices such as motor devices as the actuator. In the above embodiments, the configurations of the brake caliper and brake caliper device can be modified. As long as the brake caliper and brake caliper device include a caliper lever and a support supporting the caliper lever, a replaceable member can be provided between the caliper lever and the support supporting the caliper lever.

The foregoing embodiments describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### LIST OF REFERENCE NUMBERS

- 11: disc
- 12: brake pad
- 14: brake caliper
- 15: cylinder device
- 20: brake caliper device
- 21: bracket
- 22: coupling pin
- 30: body
- 31: base portion
- 32: first support portion
- 32A: left support
- 32A1: upper left housing portion
- 32A2: lower left housing portion
- 32B: right support
- 32B1: upper right housing portion
- 32B2: lower right housing portion
- 33: second support portion
- 33A: opening
- 35: left rotation pin
- 35A: operation lever
- 35B: roller
- 35C: upper end
- 35D: lower end
- 36: right rotation pin
- 36A: upper right rotation pin
- 36B: lower right rotation pin
- 37: cap
- 40: left caliper lever
- 42: pad attachment member
- 43: pad rotation pin
- 44: rotational axis
- 45: bolt
- 46: left lever coupling pin
- 47: left upper lever
- 47A: space
- 48: lower left lever
- 48A: space
- 50: right caliper lever
- 52: pad attachment member
- 53: pad rotation pin
- 54: rotational axis
- 55: bolt
- 56: right lever coupling pin
- 57: upper right lever
- 57A: space
- 58: lower right lever
- 58A: space
- 61: upper seal member
- 62: lower seal member
- 65: upper end radial bearing
- 66: lower end radial bearing
- 67: body radial bearing
- 70: service brake cylinder
- 80: parking brake cylinder
- 90: gap output unit
- 91: pulling unit
- 96: wire
- 100, 102, 104: replaceable member
- 101, 103, 105: elastic member
- 110: gap adjustment device
- 111: gap adjuster
- 121: first casing
- 122: second casing

## Claims

1. A brake caliper (14) comprising:
caliper levers (40, 50) holding brake pads (12), the brake pads (12) being configured to sandwich a brake disc (11) therebetween so that a braking force is generated; and
a support (30, 111) rotatably supporting the caliper levers (40, 50) such that a distance between the brake pads (12) and the brake disc (11) is adjustable,
wherein replaceable members (100, 102, 104) are provided between the caliper levers (40, 50) and the support (30, 111), and have lower hardness than the caliper levers (40, 50) or the support (30, 111).

2. The brake caliper (14) of claim 1, wherein the replaceable members (100, 102, 104) have lower hardness than the caliper levers (40, 50) and the support (30, 111).

3. The brake caliper (14) of claim 1 or 2, wherein the support (30) is a body (30) holding an actuator (15) for driving the caliper levers (40, 50) such that the caliper levers (40, 50) rotate about a fulcrum.

4. The brake caliper (14) of claim 3,
wherein the body (30) has pins (35, 36) fitted in the caliper levers (40, 50) to rotatably support the caliper levers (40, 50), and
wherein the replaceable members (100, 102) are provided at least one of (i) between tip portions of the pins (35, 36) and the caliper levers (40, 50), or (ii) between peripheries of root portions of ends of the pins (35, 36) and the caliper levers (40, 50).

5. The brake caliper (14) of claim 4, comprising:
radial bearings (65, 66, 67) surrounding the pins (35, 36) to receive loads acting in a radial direction orthogonal to an axial direction of the pins (35, 36); and
restricting members (37) restricting the radial bearings (65, 66, 67) from being out of position in the axial direction of the pins (35, 36),
wherein the replaceable members (100) are provided between the peripheries of the root portions of the ends of the pins (35, 36) and the caliper levers (40, 50), and
wherein the caliper levers (40, 50) are not in contact with the restricting members (37), but in contact with the replaceable members (100).

6. The brake caliper (14) of claim 4 or 5, wherein the replaceable members (100) are annular and have an aperture, and provided between the root portions of the ends of the pins (35, 36) and the caliper levers (40, 50) with the pins (35, 36) penetrating the apertures.

7. The brake caliper (14) of any one of claims 3 to 6, wherein the replaceable members (100, 102) are provided (i) between the body (30) and upper portions (47, 57) of the caliper levers (40, 50), and (ii) between the body (30) and lower portions (48, 58) of the caliper levers (40, 50).

8. The brake caliper (14) of any one of claims 3 to 7, further comprising elastic members (101, 103) provided between the replaceable members (100, 102) and the body (30).

9. The brake caliper (14) of claim 8,
wherein the body (30) has pins (35, 36) fitted in the caliper levers (40, 50) to rotatably support the caliper levers (40, 50), and
wherein the replaceable members (100) and the elastic members (101) are annular and have an aperture, and provided between the root portions of the ends of the pins (35, 36) and the caliper levers (40, 50) with the pins (35, 36) penetrating the apertures.

10. The brake caliper (14) of claim 8 or 9, wherein the elastic members (101, 103) are made of at least one of chloroprene rubber, urethane rubber, or silicone rubber.

11. The brake caliper (14) of any one of claims 8 to 10, wherein a contact area between the elastic members (101, 103) and the replaceable members (100, 102) is greater than a contact area between the replaceable members (100, 102) and the caliper levers (40, 50).

12. The brake caliper (14) of claim 1 or 2, wherein the support (111) is a gap adjuster (111) connected to ends of the brake pads (12) such that the brake pads (12) are rotatable about a fulcrum, and the gap adjuster (111) is configured to adjust gaps between the brake disc (11) and the brake pads (12).

13. A brake caliper (14) comprising:
caliper levers (40, 50) holding brake pads (12), the brake pads (12) being configured to sandwich a brake disc (11) therebetween so that a braking force is generated;
a body (30) rotatably supporting the caliper levers (40, 50) such that a distance between the brake pads (12) and the brake disc (11) is adjustable, the body (30) holding an actuator (15) for driving the caliper levers (40, 50) such that the caliper levers (40, 50) are rotatable about a fulcrum; and
replaceable members (100, 102) having lower hardness than the caliper levers (40, 50) and the body (30),
wherein the body (30) has pins (35, 36) fitted in the caliper levers (40, 50) to rotatably support the caliper levers (40, 50), and
wherein the replaceable members (100, 102) are provided at least one of (i) between tip portions of the pins (35, 36) and the caliper levers (40, 50), or (ii) between peripheries of root portions of ends of the pins (35, 36) and the caliper levers (40, 50).
